# EUROPEAN PATENT APPLICATION

(11) **EP 4 365 791 A1**
(43) Date of publication of application: **08.05.2024**
(21) Application number: 22383066.2
(22) Date of filing: 07.11.2022
(51) Int. Cl.: G06Q 10/047, G06Q 10/0631, G06Q 50/26

(54) **METHOD AND SYSTEM FOR AUTOMATED GENERATION OF PATROL ROUTES**

(71) Applicant: Universidad Tecnológica Indoamérica, Ambato (EC)
(72) Inventor: Guevara Maldonado, César Byron, 28017 Madrid (ES); Santos Peñas, Matilde, 28017 Madrid (ES)
(74) Representative: Pons

(57) **Abstract**

For the purpose of improving safety in cities and reducing the number of crimes, this research proposes an algorithm which combines artificial intelligence (AI) and machine learning (ML) techniques to generate police patrol routes. The invention consists of four steps and combines spatial and temporal information. First, crime data is clustered by applying K-means, then crime hotspots are considered by applying KDE and future critical spots are predicted using linear regression. In addition, the probability of crimes being committed in a given area according to a time zone is studied. This information is combined to obtain real surveillance routes in the area through a fuzzy logic decision system. The results prove that the use of spatio-temporal information allows designing surveillance routes in a way that increases their effectiveness, and therefore public safety, and reduces expenditure on police resources.

## Description

### OBJECT OF THE INVENTION

The invention focuses on the field of the generation of patrol routes, and more particularly on the application of artificial intelligence methods for automating the prediction of areas of interest and generation of patrol routes.

The present invention relates to a method for the automated generation of patrol routes. This method allows the automatic generation of routes taking into account the crime data of the areas, allowing the prediction of surveillance areas which allow preventive surveillance to be conducted.

### BACKGROUND OF THE INVENTION

In order to solve the problem of public safety and surveillance, many solutions of the state of the art have focused on precisely determining spots with the highest crime rates in an urban or rural territory. In addition, these solutions focused on predicting where new crimes will occur in order to conduct preventive crime surveillance.

Moreover, the exponential increase in crimes in different spots of a geographic region affects and jeopardizes the effective exercise of certain human rights of its citizens.

Similarly, the ineffective patrolling of the territory by security officers has contributed to increased insecurity.

An example of this situation is the prevalence of endemic levels of violence, where homicide rates have been increasing steadily overtime. The homicide rate has increased significantly from 25.9% in 2017 to 30% in 2020 in Central America and from 24.2% in 2017 to 29% in 2020 in South America.

To solve this problem, several proposals for public safety, such as DeepCrime, have been developed. DeepCrime allows predicting the commitment of crimes in each region of a city using spatial and temporal information based on crime dynamics.

Another work uses a convolutional neural network (CNN) along with a long short-term memory (LSTM) network to predict the presence of criminal events in a city by analyzing spatio-temporal information.

Another research on crime prediction proposes a Bayesian spatio-temporal model for urban crime. This solution analyzes spatio-temporal patterns and determines a trend of crime growth in the territory, in which the associated covariates and their changes are analyzed.

The state of the art identified does not provide any solution to the set of problems such as identifying crime hot spots, predicting crimes, and generating patrol routes temporarily. In addition, the identified solutions do not have the necessary characteristics for this purpose.

### DESCRIPTION OF THE INVENTION

The present invention allows for efficient analysis of a large amount of reported crime data, as thousands of crimes are committed in different geographic locations simultaneously.

The invention also allows identifying crime hotspots in the territory, which are critical areas of insecurity. Likewise, the invention allows accurately predicting future crime spots in a territory in order to perform a preventive security task in those locations.

In that sense, the invention allows solving the problem of ineffective patrolling by security officers due to the fact that spatio-temporal information and information relating to the level of crime in the territory is not used for crime prevention.

Therefore, the present invention relates to a method for the automated generation of patrol routes for crime prediction and intelligent patrolling, which uses information relating to reported crimes and their spatial location in a specific territory (state, province, city).

The method of the invention uses multiple machine learning techniques and algorithms. Therefore, the invention configures and combines multiple known statistical and machine learning techniques to analyze crime information in the territory.

The method of the invention comprises a step of determining a patrol area and obtaining a set of crime data in said patrol area. The crime data must comprise at least location data, particularly latitude and longitude, and temporal data, for example,. date and time data.

A set of crime data clusters is then generated based on the location of the crimes. For this purpose, a K-means clustering method is used. In order to identify an optimal number of clusters and a centroid thereof, an Elbow method is used.

A set of crime hotspots is then identified using a kernel density estimation (KDE) type method applied to each crime data cluster generated.

A set of crime prediction spots in each group is also calculated, for which the location and temporal data of crime data and a linear regression technique are used.

A set of probability data of the occurrence of crimes is also calculated using an amount of crime data recorded in the set of crime date in each crime data cluster and taking into account the temporal information thereof.

A set of surveillance spots is then determined using the set of crime hotspots and the set of crime prediction spots previously obtained.

For determining surveillance spots, the Euclidean distance between a crime hotspot and a crime prediction spot of a crime data cluster is calculated. In addition, a limit is set: beyond which the surveillance spot is the midpoint between said spots and below which the surveillance spot is the crime hotspot.

Once the surveillance spots have been determined, a set of travel distances and times from a previously determined position of an officer to the spots of interest obtained are calculated.

A patrol route is then generated by means of a fuzzy logic decision making technique using the set of probability data of the occurrence of crimes in each surveillance spot, travel distances and times. An order of passage through the surveillance spots, i.e., a patrol route, is thus determined.

Preferably, once the patrol route is obtained, the method may comprise a step of sending the patrol route to a mobile device of the officer for his/her viewing.

The invention also relates to a system for the automated generation of patrol routes, comprising:
- a positioning module linked to an officer and configured for determining the position of said officer;
- a crime data storage module; and
- at least one processor connected by means of a communication module with the positioning module and with the storage module and configured for carrying out the steps of the method of the invention which has been described.

Preferably, the positioning module may comprise one or more GPS modules.

In addition, the system for the automated generation of patrol routes of the invention may also comprise a display module configured for showing the generated patrol route to the officer and connected to the at least one processor by means of the communication module.

Likewise, the system of the invention may also comprise a mobile device which is the one comprising the positioning module and/or the display module. The mobile device can also be installed in a car, a motorcycle, or in a protective vest.

Moreover, the system of the invention may further comprise a warning module which is configured for providing an alert of the type of crime and the probability of occurrence thereof at the current position by means of audio, text, or visually.

The invention also relates to a computer program adapted for carrying out the steps of the described method using the defined system of the invention. Likewise, another object of the invention relates to a computer-readable storage medium comprising said computer program.

The method and system of the invention allows reducing crimes in troubled sectors and prevent new crimes. In addition, it helps police officers to perform a more efficient surveillance task by optimizing mobility and transportation resources and reducing surveillance time.

### DESCRIPTION OF THE FIGURES

To complement the present description, and for the purpose of helping to make the features of the invention more readily understandable, in accordance with a preferred practical exemplary embodiment thereof, said description is accompanied by a set of figures constituting an integral part of the same, which by way of illustration and not limitation represent the following:
Figure 1 illustrates an electronic device with a GPS tracker which allows generating routes for intelligent patrolling through high-crime geographic points, according to an exemplary embodiment of the method of the invention.
Figure 2 illustrates the interaction between the elements of the system of the invention, including users (people and transportation means) and communication equipment (GPS, servers, and the Internet), which allows patrolling by means of a route consisting of high-crime geographic points, according to an exemplary embodiment of the method of the invention.
Figure 3 illustrates an exemplary embodiment of the method of the invention divided into six phases to enable patrolling through high-crime geographic points.

### PREFERRED EMBODIMENT OF THE INVENTION

The invention relates to a system, a method, and a device which allows a user to know the geographic location with high crime rate of a specific territory in order to perform crime prevention patrols by generating optimal surveillance routes.

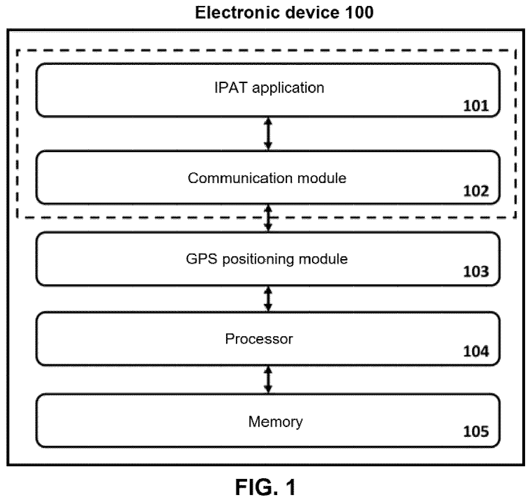

Figure 1 illustrates an electronic device (100) for generating patrol routes through high-crime geographic points, according to an exemplary embodiment of the invention.

The electronic device (100) may be a Global Positioning Satellite (GPS) system, or a smart device such as a tablet or cell phone, or a personal computer, or a laptop or the like.

The electronic device (100) can be installed in different surveillance vehicles such as a car (206), a motorcycle (205), a bicycle, a helicopter, a drone, or a vest (204) of the surveillance personnel.

The electronic device (100) includes an application (101) which allows interaction with the user by means of a physical keypad (buttons), a liquid crystal display (LCD) keypad, and a virtual voice assistant.

The information on the application (101) can be displayed through various types of displays such as a liquid crystal display (LCD), a cathode ray tube (CRT) display, a plasma display, or another type of display or virtual voice assistant. The application is installed in an operating system which allows communication to be managed by means of WiFi, 4G, GPS networks, through a communication module (102).

The electronic device (100) executes the method of the invention by means of a processor (104) and stores criminal data and geographic locations in a memory (105). The user interface allows using the GPS tracking module (103) to collect the geographic location of the device and send it by means of the communication module (102), as well as to receive and store criminal data from a database, which can be stored in the memory (105) .

The application (101) will allow guiding the user by means of a surveillance route, constantly updating its geographic location. The GPS tracking module (103) allows determining the GPS coordinates (latitude and longitude) of the electronic device (100) by means of communication with one or more navigation satellites of the Global Positioning System. The GPS tracking module (103) also allows determining the geographical coordinates of a place of departure and a place of destination.

The electronic device (100) can communicate with its different modules by means of network cables and main electronic circuit boards.

The communication module (102) can communicate with a remote data server and applications connected to the Internet. The communication module (102) can send the GPS geographic information to an application server (202). The communication module (102) can receive crime information of the geographic sector where the device (100) is located from the application server (202). The communication module (102) receives the patrol route that it has to perform guided by the electronic device (100). The patrol route can be stored in the memory (105) and read by the application (101).

The processor (104) can execute computer program instructions in the operating system of the electronic device (100) and store them in the memory (105). Moreover, the processor (104) can execute any instruction and receive information from the application server (202).

The processor (104) can include one or more general-purpose processors (INTEL, AMD, Apple microprocessors, etc.) and/or one or more special-purpose processors (digital signal processors and microcontrollers). The processor (104) is configured and programmed to execute computer applications, programs, instructions, and commands to carry out the functions of the method of the invention.

The memory (105) can include volatile and/or non-volatile data storage media, such as magnetic memory, electronic memory, internal and external disk memory. The memory (105) can be physically integrated in the electronic device (100) by means of a main circuit board. The memory (105) can be readable by means of the processor (104).

Another aspect of the application (101) is that it allows storing in the memory (105) of the electronic device (100) all information relating to crime statistics, patrol route, and spots with the highest crime rate in the geographic location of the electronic device (100), collected from the application server (202).

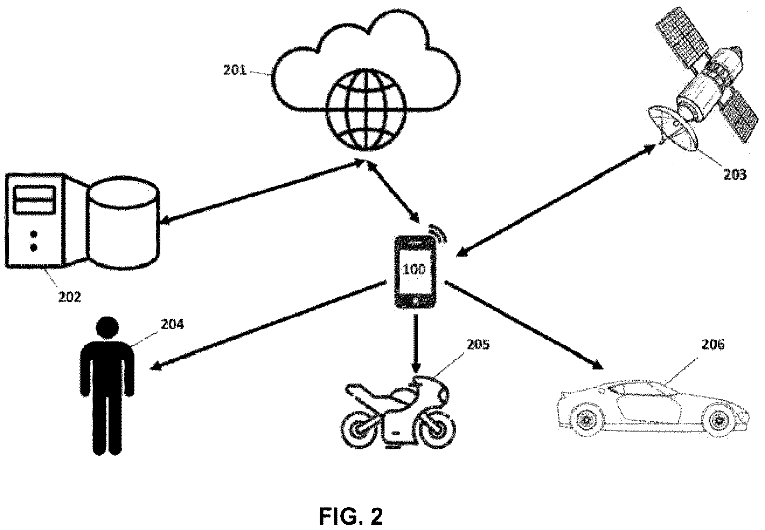

Figure 2 illustrates the interaction between users (people and transportation means) and communication equipment (GPS, servers, and the Internet), which allows patrolling by means of a route consisting of high-crime geographic points, according to an exemplary embodiment of the invention.

The electronic device (100) is a device capable of communicating and processing geographic and crime information. This electronic device (100) can be a smartphone, a laptop, or a tablet. The electronic device (100) has a communication module (102) and a processor (104) and can be installed in transportation means such as a car (206), a motorcycle (205), or in the protective vest (204) of a security officer. Electronic devices (100) such as a smartphone can communicate by different means such as 4G or WiFi over the Internet (201). The electronic device (100) can receive signal from one or more satellites (203) of the global positioning system in order to identify the geographic location thereof in latitude and longitude. The electronic device (100) can connect to the application server (202) through the Internet (201) in order to receive information relating to crime statistics and spots on the surveillance route. The electronic device (100) can periodically send its geographic location to the application server (202) through the Internet (201). Through the patrol route, the electronic device (100) provides guidance through the identified crime hotspots and also determines the travel time and distance to the next spot on the surveillance route.

In an exemplary embodiment, the electronic device (100) can receive the real-time geographic location for the user from the communication module (102) and present it on the interface of the application (101). The application server (202) sends to the electronic device (100) information relating to crime statistics and spots with the highest crime rate, as well as the visit order of the surveillance route. The electronic device (100) goes through all the crime spots according to the order sent from the application server (202) from the identified location thereof, where it will provide an audible alert, by text and/or visually through the application (101), of the type of crime and the probability of occurrence in that sector.

In an exemplary embodiment, the system of the invention allows up to 3 million electronic devices to connect to the application server (202) at the same time for use thereof. In this example, the electronic device (100) can store the history of the routes and crime statistics in the memory (105) for a period of 15 days. The electronic device (100) can access the information stored in the memory (105) in a manner disconnected from the Internet (201) through the application (101). Since it is installed in transportation means such as a car (206), the electronic device (100) receives real-time information about its geographic location periodically. The patrol route sent from the application server (202) to the electronic device (100) must take into account the transportation means in which it is installed in order to optimize the surveillance route.

The system of the invention can be divided into a set of modules, according to the function they perform within the system of the invention, thus comprising:
A) A module for processing and analyzing geographic crime data which analyzes the amount of reported crimes and clusters them into a data set called clusters by applying the K-means technique and the Elbow method.
B) A module for identifying crime hotspots which identifies a crime hotspot in each cluster by applying the kernel density estimation method based on the spatial information of reported crimes.
C) A module for predicting crimes which performs a prediction of a possible crime spot for each cluster by applying a linear regression of the crime data over time.
D) A module for calculating the probability of crimes by cluster which determines the probability of crimes being committed in each cluster depending on the day and time.
E) A module of route spots for patrolling which selects the most relevant spots based on information from the module for predicting crimes and the module for calculating the probability of crimes.
F) A module for calculating travel distances and times which calculates the travel time and distance between the spots obtained from the module of route spots for patrolling and the location of the security officer obtained by a GPS device.
G) A decision making module for generating the patrol route which determines an order of the spots from the module of route spots for patrolling based on the results of the module for calculating the probability of crimes by cluster and the module for calculating travel distances and times, applying fuzzy logic.
H) A real-time patrol module, which generates a patrol route in the geographic territory guided by the GPS device based on the order of the decision making module for generating the patrol route.

The system of the invention may also comprise a GPS geolocation device for identifying the current position of the security officer.

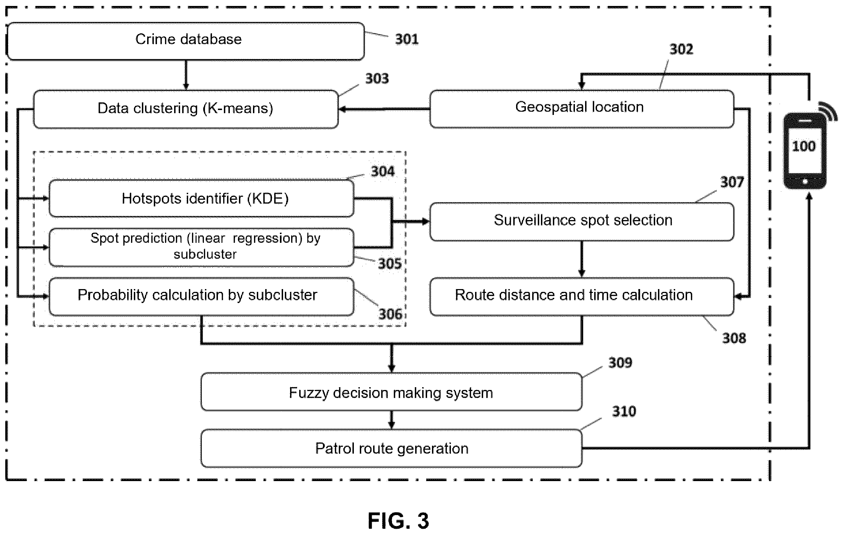

Figure 3 illustrates the method of operation of the described system for crime prediction and intelligent patrolling, so as to enable patrolling through geographic crime hotspots, according to the exemplary embodiment. The application server (202) contains the reported crime database (301) with spatial data (latitude, longitude)-temporal data (date and time), data relating to the type of crime, and information about the criminal (offender). The electronic device (100) connects to the application server (202) through the Internet (201) and the communications module (103). In this exemplary embodiment, the method of the invention comprises six steps which are:
Phase 1. Data clustering (303), in which the system selects a 5 km radius territory from the geographic location (302) of the electronic device (100) to generate clusters of reported crimes by applying the K-means algorithm and the Elbow method, in order to identify the optimal number of clusters and their centroid.
Phase 2. Crime data cluster analysis; in this step, data from the geographic clusters of crime information obtained in the previous step is analyzed. In phase 2.1, crime hotspots (304) in each cluster are identified by applying the kernel density estimation (KDE) algorithm. In phase 2.2, a prediction of future crime spots (305) in each of the clusters is performed by applying linear regression, in which a geographic location is obtained for each cluster. In phase 2.3, the probability of the occurrence of crimes (306) is calculated for each data cluster using temporal information (day and time) of the crimes in the database (301). As a result of phase 2, a probability matrix of crime hotspots (304), predicted crime prediction spots (305), and probability data of the occurrence of crimes (306) of each data cluster are obtained.
Phase 3. Selecting surveillance spots (307); the optimal surveillance spots for each cluster are selected from among those obtained previously. In this step, the distance between the crime hotspots (304) and the crime prediction spots (305) are calculated using the Euclidean distance. If the calculated distance is greater than 1 km, a midpoint between the spots is determined, otherwise, if the spots are very close, the crime hotspot (304) is selected. In this phase, only one optimal surveillance spot is obtained for each data cluster.
Phase 4. Calculating route distances and times (308), with the spots obtained in the preceding step and the geographic location (302) of the electronic device (100), where the travel distances and time between all the spots are calculated using a GIS geographic information system. This step results in a square matrix of distances and a square matrix of travel times.
Phase 5. Applying a fuzzy decision making method (309) using a fuzzy system with multiple variables such as crime probability matrix (306), surveillance spot distances and time (308), in order to determine the visit order of the patrol route. In this step, an evaluation is performed with all the surveillance spots (307) using the probability of the occurrence of crime (306), the shortest travel distance and time (308) in each cluster, and the geographic location of the surveillance officer (302) sent from the electronic device (100), in order to establish a patrol route (specific order of visit).
Phase 6. Generating patrol routes (310); a file is generated in a format used by the geographic information system that can be read by the application (101) of the electronic device (100), to be processed by the processor (104) and stored in the memory (105). The electronic device (100) retrieves the patrol route file and processes it in the application (101) so as to provide guidance through each surveillance spot and to provide a visual and audible alert of the probability of crime and the type of crime. The application (101) monitors the location of the electronic device (100) constantly to determine the distance to the next surveillance spot or the completion of the patrol route. The electronic device (100) can work without being connected to the Internet (201) or to the application server (202) for a period of 15 days, after which it must connect to the application server (202) in order to obtain a new patrol route. In the same case, the patrol route in the electronic device (100) must be updated if the surveillance sector of the surveillance officer has changed such that it is outside the 5 km range, so it must obtain a new patrol route.

An exemplary particular embodiment of the invention in which the crime database contains reported information from the last 4 years, with about 300,000 records, is shown below. The surveillance officer determines his/her geographic location with an error of 15 meters, obtaining the latitude and longitude. The officer activates the application and sends his/her geographic location by means of the Internet to the server for analysis, in which a search for criminal data within a 5 km radius, which is about 3,000 records, is conducted. The data is then analyzed and optimal data clusters with an amount of 15 clusters are obtained. Next, 15 crime hotspots (latitude and longitude) and crime prediction spots (latitude and longitude) are obtained, respectively. The amount of data and the probability of crime for each of the 15 clusters are determined based on day and time. Fifteen surveillance spots are selected from 15 crime hotspots (304) and 15 crime prediction spots (305). A matrix of distances and times is calculated from the 15 selected surveillance spots and the officer's location. The visit order of the 16 surveillance spots (15 surveillance spots and the officer's position) is determined based on the shortest distances and times and the highest probability of the occurrence of crimes for each cluster. Finally, a patrol route is generated in a format of the geographic information system to be sent to the device and received by the application, to be processed and stored.

The resulting 16-spot patrol route is 1 hour and 43 minutes with an accuracy of 89% compared to the route designed by a crime analyst

A software tool is also being developed for a GPS or mobile device to generate patrol routes for high-crime sectors and future crime areas.

## Claims

1. A method for the automated generation of patrol routes, comprising the steps of:
- determining a patrol area;
- obtaining a set of crime data (301) in the patrol area comprising at least location and temporal data;
- generating a set of crime data clusters (303) based on the location of the crimes using a K-means clustering method and an Elbow method to identify an optimal number of clusters and a centroid thereof;
- identifying a set of crime hotspots (304) using a kernel density estimation (KDE) method in each crime data cluster generated;
- calculating a set of crime prediction spots (305) in each cluster using the location and temporal data of crime data by means of a linear regression technique;
- calculating a set of probability data (306) of the occurrence of crimes based on an amount of crime data of the set of crime data in each crime data cluster according to temporal information;
- determining surveillance spots (307) from the set of crime hotspots and the set of crime prediction spots by calculating the Euclidean distance between a crime hotspot and a crime prediction spot of a crime data cluster and setting a limit, beyond which the surveillance spot is determined to be the midpoint between said spots and below which the surveillance spot is the crime hotspot;
- calculating a set of travel distances and times (308) from a previously determined position (302) of an officer to the spots of interest obtained; and
- generating a patrol route (310) by means of a fuzzy logic decision making technique (309) using the set of probability data of the occurrence of crimes in each surveillance spot, travel distances and times, determining an order of passage through the surveillance spots.

2. The method for the automated generation of patrol routes according to claim 1, further comprising a step of sending the patrol route to a mobile device of the officer for his/her viewing.

3. The system for the automated generation of patrol routes, comprising:
- at least one positioning module (103) linked to an officer configured for determining a position of the officer;
- at least one crime data storage module (301, 105); and
- at least one processor (104) connected by means of at least one communication module (102) with the at least one positioning module (103) and with the at least one storage module (301, 105) and configured for:
• determining a patrol area;
• obtaining a set of crime data (301) in the patrol area comprising at least location and temporal data;
• generating a set of crime data clusters (303) based on the location of the crimes using a K-means clustering method and an Elbow method to identify an optimal number of clusters and a centroid thereof;
• identifying a set of crime hotspots (304) using a kernel density estimation (KDE) method in each crime data cluster generated;
• calculating a set of crime prediction spots (305) in each cluster using the location and temporal data of crime data by means of a linear regression technique;
• calculating a set of probability data (306) of the occurrence of crimes based on an amount of crime data of the set of crime data in each crime data cluster according to temporal information;
• determining surveillance spots (307) from the set of crime hotspots and the set of crime prediction spots by calculating the Euclidean distance between a crime hotspot and a crime prediction spot of a crime data cluster and setting a limit, beyond which the surveillance spot is determined to be the midpoint between said spots and below which the surveillance spot is the crime hotspot;
• calculating a set of travel distances and times (308) from a previously determined position (302) of an officer to the spots of interest obtained; and
• generating a patrol route (310) by means of a fuzzy logic decision making technique (309) using the set of probability data of the occurrence of crimes in each surveillance spot, travel distances and times, determining an order of passage through the surveillance spots.

4. The system for the automated generation of patrol routes according to claim 3, wherein the positioning module (103) comprises one or more GPS modules.

5. The system for the automated generation of patrol routes according to claim 3, further comprising a display module configured for showing the generated patrol route to the officer and connected to the at least one processor (104) by means of the communication module (102).

6. The system for the automated generation of patrol routes according to claim 5, further comprising a mobile device (100) comprising the positioning module (103) and/or the display module.

7. The system for the automated generation of patrol routes according to claim 6, wherein the mobile device (100) is installed in a car (206), a motorcycle (205), or in a protective vest (204).

8. The system for the automated generation of patrol routes according to claim 3, further comprising a warning module configured for providing an alert of the type of crime and the probability of occurrence at the current position by means of audio, text, or visually.

9. A computer program adapted to carry out the steps of the method according to any of claims 1 to 2 using the system defined in any of claims 3 to 8.

10. A computer-readable storage medium comprising the computer program according to claim 9.
